# EUROPEAN PATENT APPLICATION

(11) **EP 1 708 118 A2**
(43) Date of publication of application: **04.10.2006**
(21) Application number: 06251286.8
(22) Date of filing: 10.03.2006
(51) Int. Cl.: G06K 7/00

(54) **Combination RFID/image reader**

(30) Priority: 10.03.2005 US 76157
(71) Applicant: Symagery, Kanata ON K2K 2A5 (CA)
(72) Inventor: Kricorissan, Gregg R., Ottawa, Ontario K1Y 4C1 (CA)
(74) Representative: Roberts, Gwilym Vaughan

(57) **Abstract**

An automatic identification and data capture (AIDC) system is provided. The system includes a radio frequency identification (RFID) reader, an image reader, a memory module, and a central processing unit (CPU). The image reader captures image data from a label and transmits the data to the memory module. The RFID reader captures RFID data from another label and transmits the data to the memory module. The memory module assembles the received image data and RFID data into respective frames, and then transmits the frames to the CPU. The CPU decodes the frames and outputs identifying information as a result of the decoding. The image data may include a two-dimensional image. The system may further include a flash emitter for emitting a flash of light upon the first label after prompting by a user. The system may be contained in a housing, such as a hand-held scanning module. The system may use a low-voltage battery to provide operating power.

## Description

The present invention relates to a system and method for performing automatic identification and data capture (AIDC) by reading labels and/or tags using a combination of radio-frequency identification (RFID) and image-based reading, and more particularly to an AIDC system that can capture images either for human observation, and/or for subsequent analysis and processing by a computer.

Automatic identification and data capture (AIDC) reading systems are widely used to read data, in the form of bar codes or other encoded symbols, printed on various objects. These systems may be used for a wide variety of applications, such as inventory control and point-of-sale transactions in retail stores.

AIDC reading systems may employ an optical reader that illuminates a bar code, for example, and detects light reflected from the bars or spaces of the code. In one type of AIDC reading system, an optical beam of light produced by a laser diode is used to scan the bar code symbology. Typically, the bars of the code absorb light, while the spaces of the code reflect light. The resulting pattern of reflected light is detected by circuitry within the optical reader. A sensor such as a photocell or a photodiode can detect the reflected light, and will output an electrical signal (data) analogous to the pattern of the scanned symbology. In other types of optical readers, a charge-coupled device (CCD) array or complementary metal-oxide semiconductor (CMOS) array sensor may be used to scan the length and width of the entire symbology at once, rather than point-by-point in real time, as with a scanner of the type described above.

After the bar code data is received by the optical detector, the detected signal may be subject to filtering, amplification, digitization, and decoding. The detected signal may be transmitted to a processor or decoder located within the optical reader, or to a separate device such as a personal computer. In systems where the signal is conveyed to a separate device, the optical reader may be connected to the external data processor by means of cables or via a wireless communication link. The wireless communication link can be implemented using radio frequency (RF) equipment or infrared (IR) transmitters and receivers, for example.

In retail stores, AIDC reading systems may be set up at checkout stands or may be built into a horizontal checkout counter, so that items to be purchased can be placed on a counter, deck or conveyor, and then moved through an optical reading area. Alternatively, the optical reader may be a hand-held device, in the shape of a wand or gun. Typically, in operation, the hand-held device is pointed or aimed at the retail item, so that a wide range of information, including price, may be read from the object.

RFID systems can be used to identify retail items by reading electronic information stored within tags or labels on the items. These systems can be used to remotely identify physical objects by the response signal sent back by the tag.

An RFID system typically employs at least two components: a transponder or tag, which is attached to the physical item to be identified; and a reader, which sends an electromagnetic signal to the transponder and then detects a response. Typically, the reader emits an RF signal that is received by the transponder, after the transponder comes within an appropriate range. In response to the signal from the reader, the transponder sends a modulated RF signal back to the reader. The reader detects this modulated signal, and can identify the transponder by decoding the modulated signal. After identifying the transponder, the reader can either store the decoded information or transmit the decoded signal to a computer.

The transponder used in an RFID system may be either passive or active. A passive transponder can be a simple resonant circuit, including an inductive coil and a capacitor. Passive transponders are generally powered by the carrier signal transmitted from the reader. Active transponders, on the other hand, generally include transistors or other active circuitry, and require their own battery source.

In some environments, both bar code labels and RFID tags are attached to various commodities. In these environments, an optical reader is needed to read the bar code label, and a separate RFID reader is needed to detect and identify the RFID tag. Without a dual-technology device embodying both bar code and RFID reading functionalities, two separate devices would be needed to read both bar codes and RFID tags. Thus, there is a present need for a dual-technology bar code/RFID reader.

Examples of dual technology identification tag readers that can read both bar codes and RFID tags are provided in U.S. Patents Nos. 5,382,784; 6,264,106; 6,415,978; 6,608,563; 6,672,512; and 6,791,603, and in U.S. Patent Application Publication Nos. US 2004/0164858 A1 and US 2004/0118916, the contents of each of which is incorporated herein by reference. However, the present inventor has recognized that the systems described in those patents and published applications have several drawbacks. For example, although there are prior art systems that can read both types of data, none of these systems combines the two data types together so that the decoding operation can automatically draw inferences from one data type in relation to the other. Therefore, the data types are independent, and thus one data type cannot, within the reader itself, be used to provide context to, or instructions for the data of the other type. Also, none of these devices can take photographs.

Thus, the present inventor has determined that it would be advantageous to provide a dual technology image sensor / RFID reader which is capable of reading pictorial image data and RFID tags simultaneously, and which assembles the two data types into frames and combines them for simultaneous decoding and administration.
The invention is set out in the claims.

In one aspect, an automatic identification and data capture (AIDC) system is provided. The system includes a radio frequency identification (RFID) reader, an image reader, a memory module that is in communication with the RFID reader and with the image reader via a bus, and a central processing unit (CPU) that is in communication with the memory module via the bus. The RFID reader is configured to capture RFID data from a first label and to transmit the RFID data to the memory module. The image reader is configured to capture image data from a second label and to transmit the captured image data to the memory module. The memory module is configured to receive the captured image data in an image data frame and to receive the captured RFID data into an RFID data frame, and then to make available each data frame to the CPU. The CPU is configured to decode each RFID data frame and each image data frame and to output identifying information as a result of the decoding.

The image data may include a one- or two-dimensional image. The system may also include a flash emitter that is configured to emit a flash of light upon the second label after prompting by a user or a system signal. The RFID reader may be configured to use the high frequency (HF) band or the ultra-high frequency (UHF) band for capturing data from the first label. The system may be contained in a housing, which may include a hand-held scanning module. The system may also include a low-voltage battery configured to provide operating power to the system. The system may be configured to cause the battery to provide reduced power to the system when at least a portion of the system is not in use. The RFID reader may be further configured to write data to the first label in response to a command from the CPU. The CPU may be further configured to use a result of the decoding to determine the command used for writing data to the first label. The system may also include a light source configured to emit light that acts as a pointer to the first or second label. The system may also include a light source configured to emit light that acts as a frame for bounding the first or second label. The system may also include an indicator configured to provide a status indication as a further result of the decoding. The indicator may include an array of LED lights, and the status indication may include a configuration of illuminated and unilluminated LED lights on the indicator. The indicator may include an LCD display, or user-controllable switches, or user-controllable buttons. The status indication may include an audible alert tone. The CPU may be further configured to receive commands from an external host computer. The system may also include an interface configured to integrate an OEM module to the system by using a software development kit (SDK). The SDK may be configured to enable the OEM module to interface directly to the RFID reader and the image reader, or to enable the OEM module to embed a separate functionality into the system.

In another aspect, the present invention provides an automatic identification and data capture (AIDC) system. The system includes a radio frequency identification (RFID) reader, an image reader, a memory module that is in communication with the image reader via a bus, and a central processing unit (CPU) that is in communication with the memory module via the bus, the CPU also being in communication with the RFID reader. The RFID reader is configured to capture RFID data from a first label, process the captured RFID data, assemble the processed RFID data into an RFID data frame, and make the RFID data frame available to the CPU. The image reader is configured to capture image data from a second label and to transmit the captured image data to the memory module. The memory module is configured to receive the captured image data into an image data frame and to make available each image data frame to the CPU. The CPU is configured to decode each RFID data frame and each image data frame and to output identifying information as a result of the decoding.

In yet another aspect, a method of performing an automatic identification and data capture (AIDC) operation on a labeled object is provided. The method includes the steps of capturing radio frequency identification (RFID) data from a first label; capturing image data from a second label; assembling the captured RFID data into an RFID data frame; assembling the captured image data into an image data frame; decoding the data frames; and outputting identifying information associated with the labeled object based on a result of the decoding. The image data may comprise a two-dimensional image. The method may also include the step of emitting a flash of light upon the second label after prompting by a user. The step of capturing RFID data may include using the HF band or the UHF band for capturing data from the first label. Every step of the method may be performed by using a single device contained within a housing, which may include a hand-held scanning module. The method may also include the steps of using a low-voltage battery to provide operating power to the device, and causing the battery to provide reduced power to the device when at least a portion of the device is not in use.

The method may also include the step of writing RFID data to the first label. The step of writing RFID data to the first label may include using a result of the decoding step to determine a command to be used for writing RFID data to the first label. The method may also include the step of emitting light that acts as a pointer to the first or second label. The method may also include the step of emitting light that acts as a frame for bounding the first or second label. The method may also include the step of providing a status indication based on the result of the decoding. The status indication may include a configuration of illuminated and unilluminated LED lights on an LED light array, or an audible alert tone. The status indication may be provided using an LCD display. The method may also include the step of interfacing with an OEM module by using a software development kit (SDK).

In still another aspect, the present invention provides an apparatus for performing an automatic identification and data capture (AIDC) operation on a labeled object. The apparatus includes RFID reading means for capturing radio frequency identification (RFID) data from a first label, image sensing means for capturing image data from a second label, RFID assembly means for assembling the captured RFID data into RFID data frames, image assembly means for assembling the captured image data into image data frames, decoding means for decoding the RFID data frames and image data frames, and processing means for outputting identifying information associated with the labeled object based on a result of the decoding. The image data may comprise a two-dimensional image. The apparatus may also include flash means for emitting a flash of light upon the second label after prompting by a user. The RFID reading means may be configured to use the HF band or the UHF band for capturing data from the first label. The RFID reading means, the image sensing means, the RFID assembly means, the image assembly means, the decoding means, and the processing means may be contained within a single housing, which may include a hand-held scanning module. The apparatus may also include battery means for providing operating power to the apparatus. The processing means may be further configured to cause the battery means to provide reduced power to the apparatus when at least a portion of the apparatus is not in use.

The apparatus may also include RFID writing means for writing data to the first label in response to a command from the processing means. The processing means may be further configured to use a result of the decoding to determine the command used for writing data to the first label. The apparatus may also include pointing means for emitting light that acts as a pointer to the first or second label. The apparatus may also include framing means for emitting light that acts as a frame for bounding the first or second label. The apparatus may also include indicating means for providing a status indication based on the result of the decoding. The status indication may include a configuration of illuminated and unilluminated LED lights on an LED light array or an audible alert tone. The indicating means may include an LCD display, or user-controllable switches, or user-controllable buttons. The processing means may be further configured to receive commands from an external host computer. The apparatus may also include interfacing means for integrating an OEM module to the apparatus by using a software development kit (SDK). The SDK may be configured to enable the OEM module to interface directly to the RFID reading means and the image sensing means, or to enable the OEM module to embed a separate functionality into the apparatus.
Embodiments of the invention will now be described with reference to the drawings, of which:

Figure 1 is a block diagram that illustrates an implementation of a combined RFID/image AIDC system according to a preferred embodiment of the invention.

Figure 2 is a block diagram that illustrates an alternative implementation of a combined RFID/image AIDC system according to an embodiment of the invention.

Figure 3 is a flow chart that illustrates a method of performing automatic identification and data capture from a label using both RFID and image sensing according to a preferred embodiment of the invention.

Figure 4 is an illustration of a laminated identification card that includes embedded electronic components for providing RFID data.

Figure 5 is an illustration of a business card that can be laminated and attached to an RFID card as shown in Figure 4.

Figure 6 is an illustration of a key ring holder that includes embedded electronic components for providing RFID data.

Figure 7 is an illustration of a label that can be attached to an RFID key ring holder as shown in Figure 6.

Figure 8 is an illustration of a wrist band that can be printed with a bar code, and provide RFID and image data to a reader according to the present invention.

Figure 9 is an illustration of a bar code label, including a plurality of separate bar codes, that can be attached to an RFID symbology and used by a reader according to the present invention.

The present invention combines RFID, image-based reading, and picture-taking capability with a tightly unified reader device that is media agnostic and able to read any type of symbology or tag. A symbology is any medium with embedded or encoded information that is either visible or invisible. The reader device views symbologies and tags jointly as encoded media, and having scanned them, it decodes the content automatically with the appropriate algorithm. In this manner, in addition to retrieving encoded data, the reader device can also capture pictorial information. Because the RFID tag requires a substrate for mechanical integrity, this substrate may also support the image or picture to be captured, for example, a printed barcode. Thus, the present invention allows a user to read one or more bar codes and/or RFID tags, as well as capturing a picture of the occurrence. Any of these capabilities can be used individually, or in any combination. At the user's choice, the picture-taking capability can also be used for other tasks, such as for signature capture, proof of delivery, or for proof of damage.

The reader device is embodied in an original equipment manufacturer (OEM) module of a suitably small size, and can be deployed in numerous ways. For example, the reader device may be deployed as a hand-held scanner, a portable data terminal, a fixed mount device, or an embedded device. The typical module construction is more fully described in U.S. Patent Application No. 11/000,256, entitled "Miniaturized Imaging Module Construction Technique" and filed November 30, 2004, and in U.S. Patent Application No. 10/927,694, entitled "Optical Image Reader" and filed on August 27, 2004, the contents of both of which are incorporated herein by reference. Whereas the above references mainly describe the imaging components, the present invention also includes additional components, as further described herein. The reader device communicates internally, via a system bus, with a memory module and a processor, either via Direct Memory Access (DMA) or the like, or directly. The reader device communicates externally, to a host computer or other data consumer, by using any of various standard technologies, including synchronous or asynchronous serial communications, serial wideband multipoint communications, parallel communications, or wireless communications, or the like.

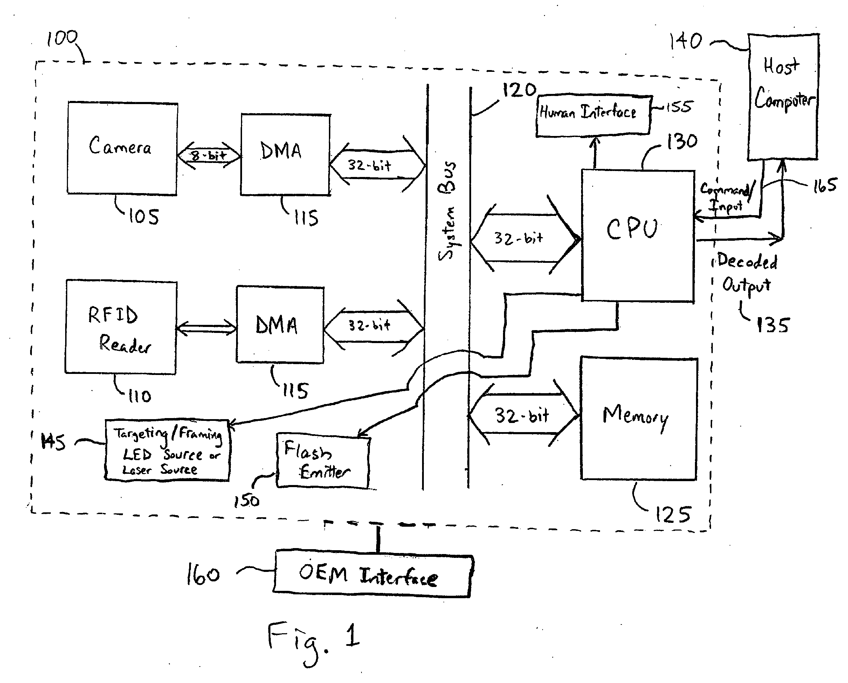

Referring to Figure 1, in a preferred embodiment of the invention, a combination RFID / image reader 100 includes a camera 105 and an RFID reader 110. The camera 105 is configured to capture image data, or pictorial information, from a label or tag. The image data may be either one-dimensional or two-dimensional. The reader 100 includes an LED and/or a laser light source 145 that is used for "targeting" and/or "framing", or bounding, the image to be captured. For the targeting function, the LED light source 145 projects a light pattern onto the symbology to be read, and acts as a pointer to enable the user to know intuitively that the reader 100 is properly aimed at the symbology. The targeting function is more fully described in U.S. Patent Application No. 11/033,093, entitled "Targeting System for a Portable Image Reader" and filed January 10, 2005, the contents of which are incorporated herein by reference. For the framing function, an LED and/or a laser light source 145 identifies the entire field of view of the camera 105 by projecting a light frame that appears as a border or boundary for the field of view. The light source 145 may also indicate the center of the field of view, and may help the user to aim the reader 100 and to hold it at the correct distance. Because the RFID reader 110 may be coaxial with the camera 105, the reader's targeting/framing indication may apply to both the RFID reader 110 and the camera 105. The framing function is more fully described in U.S. Patent Application No. 11/006,163, entitled "Dual Laser Targeting System" and filed December 7, 2004, the contents of which are incorporated herein by reference.

The RFID reader 110 is configured to capture RFID data from a label or tag. The typical RFID reader 110 may be based on one or more integrated circuit devices, using large-scale-integration (LSI) technology, although other circuit devices and technologies can be used for the RFID reader 110. Thus, the RFID reader is typically configured to transfer the data in an 8-bit format, although other data formats can be used. Typically, the RFID reader 110 uses the high frequency (HF) range of the electromagnetic spectrum; the HF range is 3 MHz - 30 MHz. Alternatively, the RFID reader may be configured to use the ultra-high frequency (UHF) range; i.e., the 300 MHz - 3 GHz range. However, operating frequencies are typically restricted to bands made available for 'free use' by regulating bodies such as the FCC in the USA. Preferably, the camera 105 and the RFID reader 110 are both housed together in an integrated unit, such as, for example, a hand-held scanner, a portable data terminal, a fixed mount device, or an embedded device, although the camera 105 and the RFID reader 110 can be housed in separate units.

After capturing image data from a label or tag, the camera 105 transmits the image data to a first DMA controller 115 via an 8-bit communications link. The DMA controller allows a peripheral device to gain high speed access to the system bus 120 without reliance on a central processing unit (CPU) 130, with higher throughput and without the latency of relying on the CPU 130. The DMA 115 then repackages the image data, typically into 32-bit packets, and transmits the data via a system bus 120 to a memory module 125. Independently of the camera 105, after capturing RFID data from a label or tag, the RFID reader 110 transmits the RFID data to a second DMA 115, which then repackages the RFID data, typically into 32-bit packets, and transmits the data via the system bus 120 to the memory module 125. However, the camera 105 and the RFID reader 110 can be in communication with the system bus 120 using any suitable interfacing means. Additionally, it is noted that 32-bit packets have been found to yield optimum system efficiency, but the system 100 can be configured to process either the image data or the RFID data or both in packets of varying sizes. Thus, the memory module 125 receives both the image data and the RFID data from labels or tags that can identify the same object, but may contain differing information. The memory module 125 then assembles the image data into frames and assembles the RFID data into frames. The memory module 125 stores the captured data as frames of data, and makes the data frames available via the bus 120 to the CPU 130. The CPU 130 includes software that can operate on the image data frames and RFID data frames together on demand to analyze and decode the identifying information originally captured by the camera 105 and the RFID reader 110. In so doing, the CPU 130 may use the two independent types of data to provide context to the decoding operation, thereby improving the quality of the resulting identifying information. After completion of the decoding operation, the CPU 130 provides a decoded output 135 to a host computer 140, which is typically external to the reader system 100. In order to provide the decoded output 135 to the host computer 140 and/or receive via command/input 165, the CPU 130 may use any of various standard communication technologies, including synchronous or asynchronous serial communications, serial wideband multipoint communications, parallel communications, wireless communications, or the like.

During or upon completion of the label reading functions by the system 100, the CPU 130 also may output a signal to a human interface 155 to indicate the status of the read. The human interface 155 is typically a set of LED indicators, possibly an LCD panel, or a set of audible alert tones, and possibly some electrical switches or buttons to allow for user control. Typical status indications may include "pass", "fail", or "try again", and these may be indicated by illumination of a particular LED indicator light, or by emission of a distinctive alert tone. However, human interface 155 can be any suitable electrical or electronic device capable of displaying graphical and/or textual information to a user.

The system 100 also provides an OEM interface 160 to enable an engineer to integrate a third-party OEM module to the system 100. Additionally, the OEM interface enables an engineer to integrate the reader 100 with other equipment in several ways. All OEM integration is provided for via a common software development kit (SDK) that enables deployment under, for example, Desktop Windows, WinCE.net, or a customized operating system.

The SDK may be designed to enable an OEM to develop software at varying levels of complexity. For example, an SDK having a relatively low level of complexity may enable an OEM to work with a user interface that can be easily adapted to the user's own product, and without needing to have a detailed understanding of the reader technology. An SDK having a medium level of complexity may enable an OEM to work more directly with the reader, and for example, to use a CPU within the OEM's existing product to interface directly with the camera 105 and the RFID reader 110, instead of having to employ a separate CPU. Finally, a more comprehensive SDK having a relatively high level of complexity may enable an OEM to embed an entirely new product of its own design within the reader's hardware, and possibly add functions to the otherwise standard hardware. The hardware platform for CPU 130 may implement a powerful but highly compact 32-bit processor, such as the Motorola iMXI-L, which is based on an ARM9 core. However, CPU 130 can be any suitable type of processor, such as, for example, any suitable type of general purpose microprocessor or microcontroller, a digital signal processor, ASIC, PROM, EPROM, EEPROM, or the like.

As described previously, the simultaneous reading of the RFID data and image data provides the present invention with several advantages. For example, the fact that the data exists in a frame format within the memory 125 provides an integrity to the data, and this integrity can be used in conjunction with a corresponding data frame of the other data type to provide system redundancy. The redundancy may enable the content of one data type to be modified or reassessed in the context of the other data type. This data integrity also lends itself to an inherent security of the data. For example, the data may be coded for error detection, thus enabling the system to detect or correct errors, or to enable only authorized users to read the data. In addition, with respect to the image data, the frames of data typically correspond to a pictorial image that can be viewed directly by a person, thus providing another way to analyze the data.

In addition to the inherent integrity and security of the data as described above, the simultaneous reading of the two data types provides a capability of reading additional meanings of the data based on certain combinations of the content. For example, a standard product could be shipped with a certain bar code and a certain RFID tag. The bar code and the RFID tag may include data relating to product features, a product warranty, etc. Because the RFID tag can be written as well as read, one could rewrite the RFID tag in the field with a secure code. When the secure code is read together with the bar code, certain accesses could be unlocked that would be restricted unless the correct code is present. This provides security for both the RFID data and the ability to rewrite the RFID tag.

The system 100 can operate in "near-real time". In other words, the step of assembling the captured data into frames prior to decoding the data and outputting the identifying information may cause a slight, imperceptible delay in the operation of the system. The assembly step enables the system 100 to operate at the very high speeds of the memory module 125 on frames of data, instead of operating on the data piece-meal in a serial fashion as it arrives from the reader, as is done by conventional optical scanners. The frames of data also provide for much more flexibility in the subsequent use of the captured data.

Conventional reader systems sequentially illuminate the symbology of interest with a microscopic beam of laser light from a single laser beam, and receive the light reflected back from the symbology as it is scanned. The received reflected light is read as a serial signal using a single photodetector. The modulation of the serial signal corresponds to the bar code pattern of the symbology is being scanned. Typically, to be effective, this process is one-dimensional and unidirectional, precisely aligned with the x-axis of the symbology. By contrast, in the present invention, the camera 105 receives reflections of light (using either illumination from flash emitter 150, see further description below, or ambient light) from the entire area of symbology, all at the same time. A lens is typically used in front of the camera 105 to collect and focus this reflected light simultaneously onto an x-y array of photosensitive pixels within the camera 105, and in this manner, each pixel represents a gray scale or color element of the symbology. These pixels are then digitized and later assembled in the memory 125 into a frame of image data. Because the matrix simultaneously captures the entire image of the symbology to be read, the resulting frame of image data accurately represents the image of the entire symbology. A preferred embodiment of the present inventions uses 1.3 million pixels for sharp image resolution and robust system performance; however, the number of pixels in the photosensitive array of the camera 105 may vary.

The image capture process typically uses an exposure time within the range of 8-14 milliseconds. A longer exposure time may be used, although the resulting image may incur blurring if the exposure is too long. A shorter exposure time may also be used, as long as adequate image quality results. The latency in the overall system 100 induced by the exposure time and the digitizing of the pixel array may result in a slight, imperceptible delay. Although the system can be configured to operate in real time, such use of near-real time operation provides the present invention with several advantages. First, the user need not be concerned about accurately aligning the axis of the reader 100 with the symbology to be read. Because the entire image of the symbology is captured at once and then stored in a frame of image data, the subsequent analysis and decoding algorithms are better able to accurately analyze the data content. This also enables special software routines to be used for eliminating detrimental effects to reading quality that often arise from physical damage to the symbology. In some instances, even if part of the symbology is missing from the captured image, an algorithm may be able to derive the missing content using the available part of the symbology. A second advantage of the present invention is that a wider variety of symbologies can be read, because the image reading has a two-dimensional reading capability. This also enables the positional relationships of the symbology elements to be encoded to provide for greater data storage capacity and density. These capabilities are exploited by what are commonly known in the art as "2-D" codes, for example, PDF417, Maxicode, and Datamatrix. A third advantage is that because the image of the symbology is resident in a frame even after the decoding has occurred, this image data can then be used for other purposes, such as optimizing exposure parameters for a subsequent decoding, subsequent display for human observation, software-based corrections, or for sending to a post-processor for optical character recognition. These features provide the present invention with a highly robust capability for reading and decoding a symbology.

The system 100 features a tightly integrated engine with unified mechanics. The decoding operation uses software that is universally designed to handle any one- or two-dimensional symbology type. The RFID reader 110 is designed for multi-protocol HF or UHF tag compatibility. The RFID reader 110 may have a read range of up to approximately 24 inches or more, although the reader 110 in a hand-held application typically operates in a range of about 2 to 8 inches. The RFID reader 110 reads RFID labels that may be either active labels or passive labels. If the RFID label is an active type that emits its own RF energy, the RFID reader 110 may simply receive the energy from the label. On the other hand, if the RFID label is a passive type that does not emit its own energy, the RFID reader may emit an HF (or UHF) signal that energizes the RFID label and causes it to respond; then, the RFID reader receives the label's "reflected" signal. Additional functions may be added to the reader 110 such as allowing auto-discrimination of one tag from another, disabling a response, or other functions to improve the reader's utility. The RFID reader 110 may also be configured to write data to the RFID label.

The camera 105 has at least monochrome picture-taking capability; the camera 105 may also have a capability of taking color pictures. The system 100 may also include a flash emitter 150 for emitting a flash of light on a label, or illuminating the label, to enable the camera 105 to better "see" the image under some circumstances. The flash emitter 150 operates automatically, typically in response to a user control. The CPU 130 receives a signal that is triggered by the user (e.g., by pressing a button on human interface 155, or via host computer command/input 165) and then commands the flash emitter 150 to emit a flash of light. However, the camera 105 may capture image data using ambient light, and thus, a flash emitter 150 is not required. The CPU 130 uses a unified / common back-end processor platform. The system 100 is typically configured to have a small footprint to allow for simple OEM integration, and is generally suitable for low-power, hand-held or portable applications. In a preferred embodiment, the system 100 uses a single 3.6-volt LiIon cell battery for power. This battery has a battery life that is consistent with typical mobile usage of approximately 5000 decode cycles or more per shift. Battery run time that allows for at least 5000 decode cycles over a typical eight-hour work shift is assured by a hardware design that incorporates low power design techniques. Moreover, active power management is exercised by using CPU 130 to at least reduce power to the various circuit elements, put them in a dormant mode, or disconnect power to them when they are not in use.

A typical frame of image data is a block of data bytes whose values represent the luminance value of the corresponding pixel of the imager array. A single frame typically may include all of the data needed to compose the entire image formed by those pixels, although each frame can include a portion of the image data. An image data frame may include the decoded results from the image data string. The system software is configured to assign a starting address and a length for the frame of data, in order to allow processing of the data frame. An RFID data frame may include a raw RFID data pattern; alternatively, an RFID data frame may include the decoded RFID data string. The system software is configured to assign a starting address and a length for the frames of RFID data.

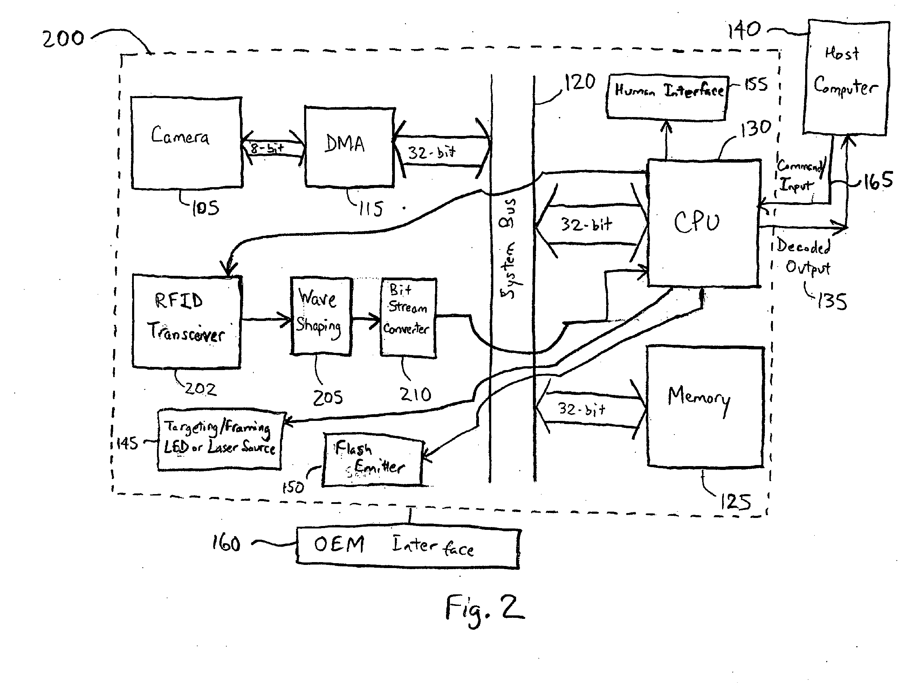

Referring to Figure 2, in a alternative embodiment of the invention, a combination RFID / image reader 200 includes many of the same modules as the reader 100. In place of a digital RFID reader 110 as shown in Figure 1, the reader 200 captures RFID data using an RFID transceiver 202. The RFID transceiver 202 may include one or more amplifiers, filters, and demodulators. While capturing RFID data, the RFID transceiver 202 is configured to transmit the RFID data to a wave shaping module 205, which performs a wave shaping operation on that data, and then transmits the data to a bit stream converter 210. Typically, in this embodiment, the RFID reader is not based on a single integrated circuit; instead, it includes discrete electronic components that each perform separate functions, including receiving the RFID data using the receiver 202, waveshaping the detected data using module 205, and bit-stream conversion using module 210, although these functions can be provided on a single integrated circuit. The effect of the wave shaping module 205 and the bit stream converter 210 is to process the RFID data into frames, and make the RFID data frames available to the CPU 130. The bit stream converter 210 sends the RFID data directly to the CPU 130, rather than directly to memory 125 over the system bus 120. The CPU 130 may subsequently deposit the data into memory 125. Because the RFID data has already been wave-shaped and bit-stream-converted into frames, this data can be decoded in the CPU 130 together with the image-related data. The CPU 130 then operates the decoding algorithm upon either the individual frames of each data type or the combined data frames to produce the decoded output 135. The RFID transceiver 202 can also receive commands from the CPU 130 to instruct the transceiver 202 to emit RF energy, typically either in the HF band or the UHF band, upon the target label in order to capture the RFID data from the label.

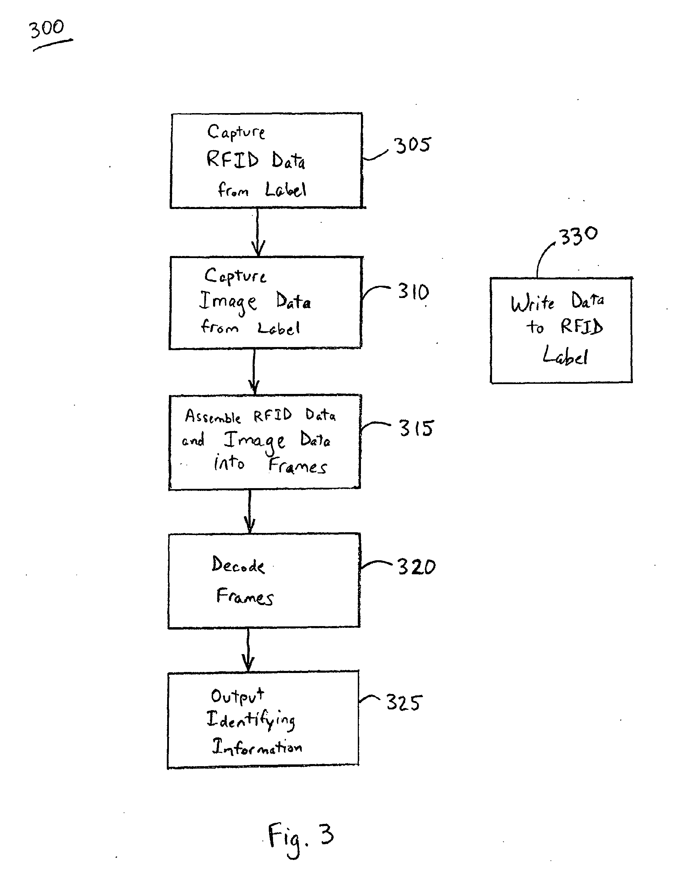

Referring to Figure 3, a flow chart 300 illustrates a method of operation of the system 100. First, in step 305, RFID data is captured from a label. Then, in step 310, image data is captured from a label. It is noted that steps 305 and 310 may occur in the sequence shown, at the same time, or in the reverse sequence; i.e., step 310 may occur prior to step 305. At step 315, the captured RFID data and image data are assembled together into frames. Then, the data frames are decoded at step 320, and the identifying information is outputted at step 325. In addition, optional step 330 entails writing RFID data to the RFID label. Certain types of RFID labels allow their own data to be rewritten, and both the system 100 and the system 200 have the capability to write RFID data to these types of labels if desired. Step 330 may be executed in parallel to the method illustrated by steps 310 - 325.

Each of the steps shown in flow chart 300 may include several possible subroutines that may be executed in the course of completing the respective step of the method of the embodiment of the present invention. For example, step 305 may include any or all of the following subroutines:
- Monitor user trigger (or command from host computer 140) and respond
- Transmit RF carrier to energize tag and/or query tag
- Adjust RF carrier level if necessary to get a good read
- Receive modulated RF response from tag
- Adjust RF receive gain as necessary to get a good read
- Process and demodulate received RF to recover encoded data stream
- Present recovered / encoded raw RFID data to DMA controller

Step 310 may include any or all of the following subroutines:
- Monitor user trigger (or capture command from system) and respond
- Illuminate the area to be scanned, and initialize image sensor, using default exposure and illumination settings
- Enable image sensor to acquire image of the area of interest
- Adjust exposure settings if necessary to achieve adequate image contrast
- If image is being captured for human observation, adjust exposure for higher quality image
- Present raw image data from image sensor to DMA controller

Step 315 may include any or all of the following subroutines:
- DMA controller deposits raw RFID data into its assigned memory area (Frame 1)
- DMA controller deposits raw image data into its assigned memory area (Frame 2)
- DMA controllers notify system of availability of new data

Step 320 may include any or all of the following subroutines:
- CPU processes raw RFID data found in Frame 1 to extract encoded data, such as tag identifier and tag data payload, and uses algorithm determined to be appropriate to tag encoding (e.g., Tag-it, ISO15693 etc.)
- CPU places results (decoded RFID data) into output register, and flags system it is available for:
   o Output to host computer; or
   o Subsequent analysis and interpretation by CPU in context of decoded bar code data
- CPU processes raw image data in Frame 2 if necessary to improve contrast and/or readability
- CPU examines image data to identify regions of interest (e.g., things that look like they might be bar codes), and marks their locations for subsequent use
- CPU runs decoder algorithms, for example, to identify bar code type, extract data content, and/or compensate for any damage or irregularities in the bar code image
- CPU places results (decoded image data) into output register, and flags system that it is available for:
   o Output to host computer, or
   o Subsequent analysis and interpretation by CPU in context of decoded RFID data
- If contextual analysis (i.e., interpreting the contents of the RFID tag and bar code together) is to be performed, then the CPU examines the contents of both Frame 1 and Frame 2 and decodes them together to determine if specific (possibly secure) encoded conditions exist. This could be done at the frame level, or after decoded results are available for output. If such contextual conditions exist, the system may interpret the codes in a completely different manner and take action, such as unlocking a hidden feature, automatically rewriting the RFID tag to change its meaning (see description of step 330 below), etc.

Step 325 may include any or all of the following subroutines:
- CPU 130 outputs the decoded RFID and bar code data to the host computer according to a protocol. This protocol may run over any of several physical level interfaces such as Async, parallel, USB, or the like. The protocol allows the CPU 130 to direct the delivery of the decoded data to the required location in the host computer 140. In addition, the CPU 130 could perform other functions prior to transmission, such as packetizing the data, error proofing the data, or compressing the data.
- In addition to the decoded data, the CPU 130 may derive and send information related to the data, such as the encoding type, time taken to decode, etc.
- The protocol may be bi-directional in order to enable the host computer to control the system 100, or otherwise enable the host to send data to the CPU over the link's reverse direction. The protocol may stream or multiplex the data types (RFID, bar code, or image), or the protocol may present the data types as one or more data feeds over one or more interface types.
- CPU 130 prepares/processes image data for output to host computer if intent is to present it for human observation. This preparation would include processing steps such as edge sharpening (i.e., exaggeration of image high frequency content), softening (i.e., reduction of image high frequency content), and/or improving image uniformity (i.e., equalization of pixel values across the plane) to eliminate non-linearities due to the intervening optics or uneven illumination. These steps are typically not needed for simple bar code decoding.
- CPU 130 presents image data in a standard format, such as BMP, compressed JPG, or the like.
- A software application in the host computer receives the data and either displays, possibly further processes it (such as for OCR - Optical Character Recognition), or forwards it as system requirements dictate.

In addition to the method illustrated by flow chart 300, the present invention also provides a capability of writing data to certain types of RFID tags, as illustrated by step 330. An important advantage of some types of RFID tags is the ability for their data content to be re-written. Writing the RFID tag can be done explicitly by a command from the host computer which places the RFID transmitter into a special mode that causes the tag to accept and store the encoded data that follows. Alternatively, writing the RFID tag can be also done implicitly according to the results of a simultaneous capture of an RFID tag and at least one bar code. The ability to write and re-write a tag is usually protected or made secure by a user password in the system. However, the simultaneous reading of a secret bar code could allow data to be re-written, possibly a specified number of times. In this manner, the present invention provides an ability to dynamically modify the data content of the RFID tag, or to dynamically modify the resulting behavior of the system in the context of another encoded symbology.

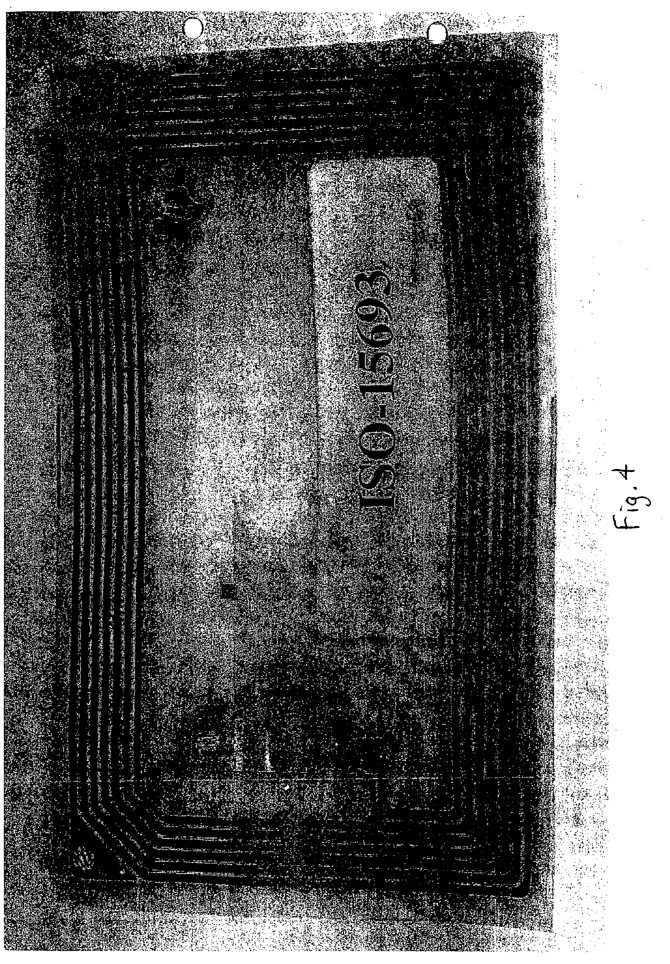

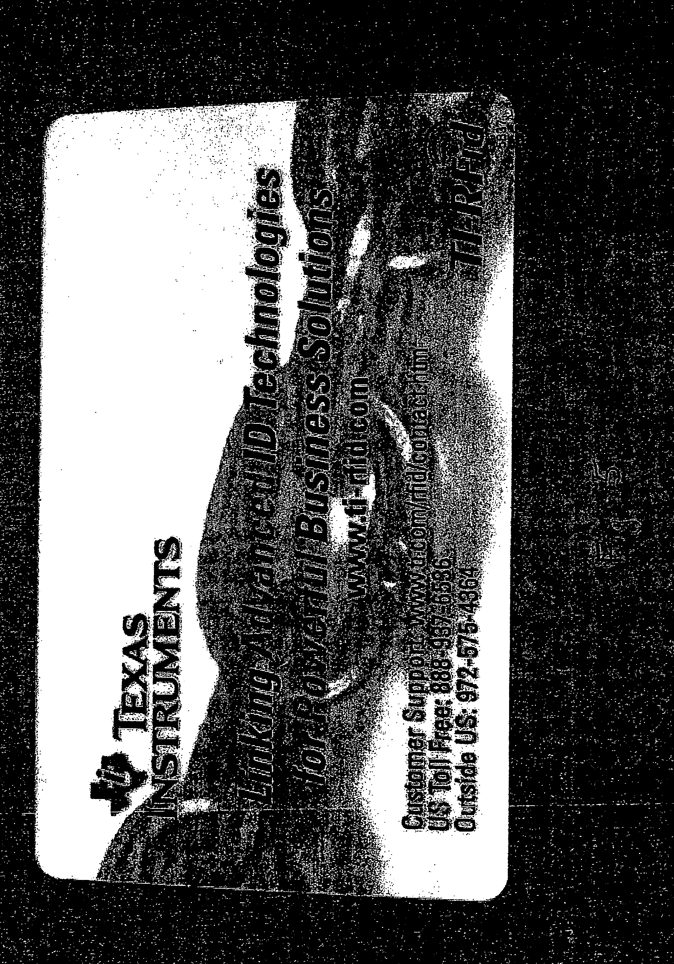

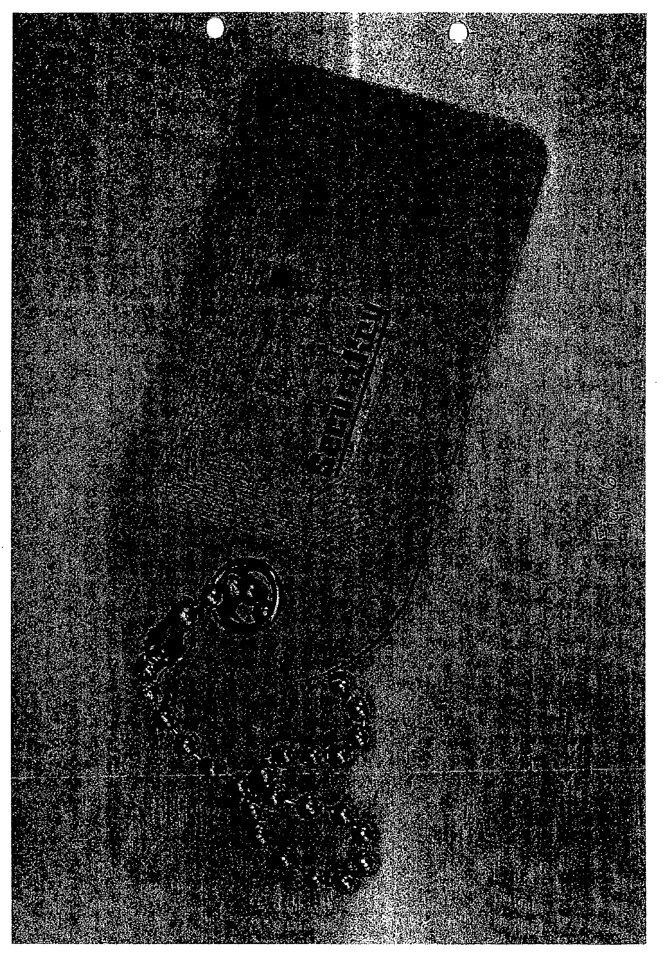

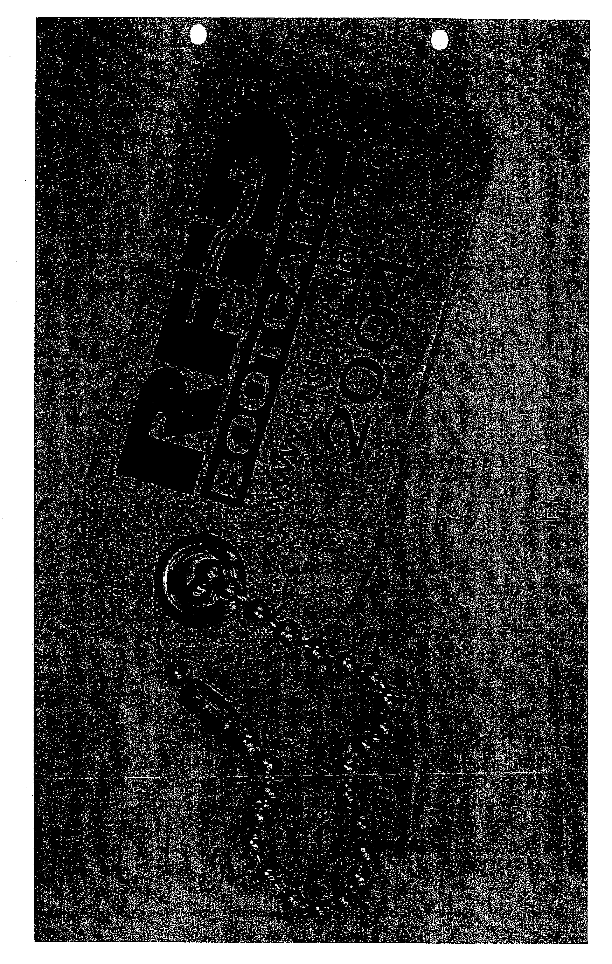

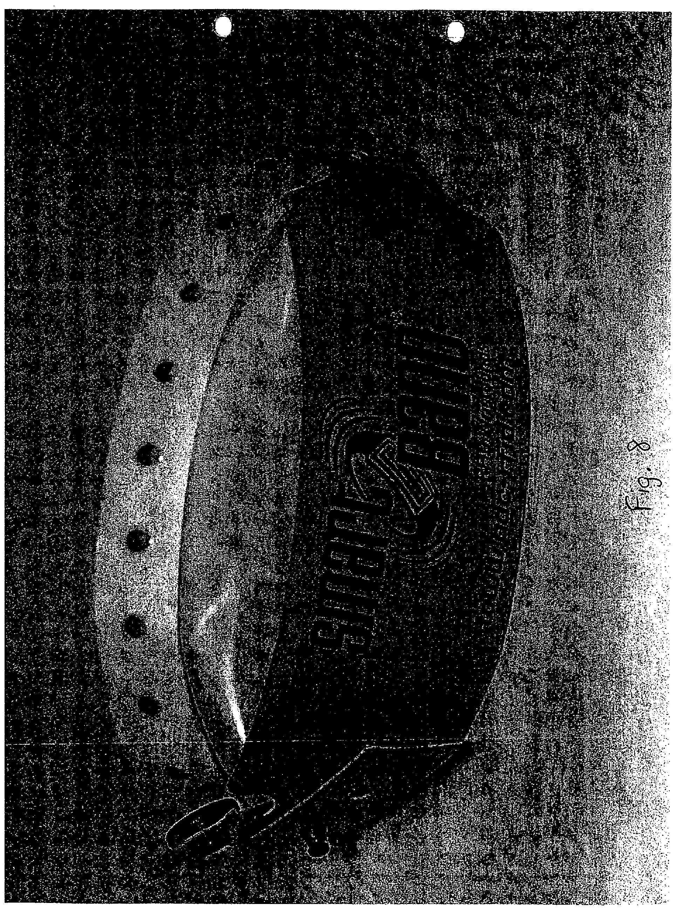

Each of Figures 4-9 provides an illustration of a type of tag, label, or symbology that lends itself to the AIDC functions provided by the system 100 or the system 200 of the present invention. Referring to Figure 4, a substrate, or a laminated card with embedded electronics, may be used as an identification badge or as a label or tag that provides product identification using RFID. Referring to Figure 5, a typical business card can be attached or printed on the back of the card shown in Figure 4 to provide image data that relates to the RFID data from Figure 4. Referring to Figures 6 and 7, the same technology as shown in Figures 4 and 5, respectively, can be used for a key ring carrier. Referring to Figure 8, the symbology may be configured as a wrist band. The wrist band of Figure 8, which may optionally be printed with a bar code, includes electronics that are embedded within the wrist band, but which can be read by the system 100 or 200 according to the present invention. Referring to Figure 9, another type of symbology that can be captured by the present invention is a standard bar code label, which also contains an RFID tag which is sandwiched in the label stock. Here, there are three separate bar codes and an RFID tag that conventionally must be read as separate data entities, but which can be captured in a single operation by the reader 100 or 200 according to the present invention. Yet another typical symbology that lends itself to a combination RFID/image reader according to the present invention is a key fob.

While the present invention has been described with respect to what is presently considered to be the preferred embodiment, it is to be understood that the invention is not limited to the disclosed embodiments. To the contrary, the invention is intended to cover various modifications and equivalent arrangements included within the spirit and scope of the appended claims. The scope of the following claims is to be accorded the broadest interpretation so as to encompass all such modifications and equivalent structures and functions.

## Claims

1. An automatic identification and data capture (AIDC) system, comprising:
a radio frequency identification (RFID) reader;
an image reader;
a memory module, the memory module being in communication with the RFID reader and with the image reader via a bus; and
a central processing unit (CPU), the CPU being in communication with the memory module via the bus,
wherein the RFID reader is configured to capture RFID data from a first label and to transmit the RFID data to the memory module; and
wherein the image reader is configured to capture image data from a second label and to transmit the captured image data to the memory module; and
wherein the memory module is configured to receive the captured image data in an image data frame and to receive the captured RFID data in an RFID data frame, and then to make available each data frame to the CPU; and
wherein the CPU is configured to decode each RFID data frame and each image data frame and to output identifying information as a result of the decoding.

2. The AIDC system of claim 1, wherein the image data comprises a one- or two-dimensional image; and/or
the system further comprising a flash emitter, the flash emitter being configured to emit a flash of light upon the second label after prompting by a user; and/or
wherein the RFID reader is configured to use the high frequency (HF) band for capturing data from the first label; and/or
wherein the RFID reader is configured to use the ultra-high frequency (UHF) band for capturing data from the first label; and/or
wherein the system is contained in a housing; and/or
wherein the housing comprises a hand-held scanning module, and the system further comprises a low-voltage battery configured to provide operating power to the system; and/or
wherein the system is configured to cause the battery to provide reduced power to the system when at least a portion of the system is not in use.

3. The AIDC system of any preceding claim wherein the RFID reader is further configured to write data to the first label in response to a command from the CPU; and preferably
wherein the CPU is further configured to use a result of the decoding to determine the command used for writing data to the first label.

4. The AIDC system of any preceding claim further comprising a light source configured to emit light that acts as a pointer to the first or second label; and/or
further comprising a light source configured to emit light that acts as a frame for bounding the first or second label; and/or
further comprising an indicator configured to provide a status indication as a further result of the decoding; and/or
wherein the indicator comprises an array of LED lights, and the status indication includes a configuration of illuminated and unilluminated LED lights on the indicator; and/or
wherein the indicator comprises an LCD display; and/or
wherein the indicator comprises user-controllable switches; and/or
wherein the indicator comprises user-controllable buttons; and/or
wherein the status indication includes an audible alert tone.

5. The AIDC system of any preceding claim wherein the CPU is further configured to receive commands from an external host computer; and/or
further comprising an interface configured to integrate an OEM module to the system by using a software development kit (SDK); and/or
wherein the SDK is configured to enable the OEM module to interface directly to the RFID reader and the image reader; and/or
wherein the SDK is configured to enable the OEM module to embed a separate functionality into the system.

6. An automatic identification and data capture (AIDC) system, comprising:
a radio frequency identification (RFID) reader;
an image reader;
a memory module, the memory module being in communication with the image reader via a bus; and
a central processing unit (CPU), the CPU being in communication with the memory module via the bus, and the CPU being in communication with the RFID reader,
wherein the RFID reader is configured to capture RFID data from a first label, process the captured RFID data, assemble the processed RFID data into an RFID data frame, and make the RFID data frame available to the CPU; and
wherein the image reader is configured to capture image data from a second label and to transmit the captured image data to the memory module; and
wherein the memory module is configured to receive the captured image data in an image data frame and to make available each assembled image data frame to the CPU; and
wherein the CPU is configured to decode each RFID data frame and each image data frame and to output identifying information as a result of the decoding.

7. A method of performing an automatic identification and data capture (AIDC) operation on a labeled object, the method comprising the steps of:
capturing radio frequency identification (RFID) data from a first label;
capturing image data from a second label;
assembling the captured RFID data into an RFID data frame;
assembling the captured image data into an image data frame;
decoding the data frames; and
outputting identifying information associated with the labeled object based on a result of the decoding.

8. The method of claim 7, wherein the image data comprises a two-dimensional image; and/or
further comprising the step of emitting a flash of light upon the second label after prompting by a user; and/or
wherein the step of capturing RFID data comprises using the high frequency (HF) band for capturing data from the first label; and/or
wherein the step of capturing RFID data comprises using the ultra-high frequency (UHF) band for capturing data from the first label; and/or
wherein every step of the method is performed by using a single device contained within a housing; and/or
wherein the housing comprises a hand-held scanning module, and the method further comprises using a low-voltage battery to provide operating power to the device; and/or
wherein the method further comprises causing the battery to provide reduced power to the device when at least a portion of the device is not in use.

9. The method of claim 7, further comprising the step of writing RFID data to the first label; and/or
wherein the step of writing RFID data to the first label comprises using a result of the decoding step to determine a command to be used for writing RFID data to the first label.

10. The method of claim 7, further comprising the step of emitting light that acts as a pointer to the first or second label; and/or
further comprising the step of emitting light that acts as a frame for bounding the first or second label; and/or
further comprising the step of providing a status indication based on the result of the decoding; and/or
wherein the status indication includes a configuration of illuminated and unilluminated LED lights on an LED light array; and/or
wherein the status indication is provided using an LCD display; and/or
wherein the status indication includes an audible alert tone.

11. The method of claim 7, further comprising the step of interfacing with an OEM module by using a software development kit (SDK).
